# EUROPÄISCHE PATENTSCHRIFT

(11) **EP 3 125 651 B1**
(45) Veröffentlichungstag und Bekanntmachung des Hinweises auf die Patenterteilung: **03.05.2023**
(21) Anmeldenummer: 16181007.2
(22) Anmeldetag: 25.07.2016
(51) Int. Cl.: H05B 45/31

(54) **DIMMEN VON BELEUCHTUNGSVORRICHTUNGEN**
DIMMING OF LIGHTING DEVICES
ATTENUATION DE DISPOSITIFS D'ECLAIRAGE

(30) Priorität: 31.07.2015 DE 102015214631
(43) Veröffentlichungstag der Anmeldung: 01.02.2017
(73) Patentinhaber: Siemens Schweiz AG, 8047 Zürich (CH)
(72) Erfinder: Stieglbauer, Walter, 93083 Obertraubling (DE)
(74) Vertreter: Siemens Patent Attorneys

(56) Entgegenhaltungen:
- EP-B1- 0 618 667
- EP-B1- 0 923 274
- DE-A1-102004 028 990
- DE-A1-102012 021 856
- US-A- 5 239 255
- US-A1- 2009 096 384
- US-B2- 6 813 720

## Beschreibung

Die vorliegende Erfindung betrifft ein Verfahren zur Leistungssteuerung einer Leuchteinrichtung durch Anschließen der Leuchteinrichtung an einer Anschlusseinrichtung und Betreiben der Leuchteinrichtung in einem Phasenabschnittbetrieb. Darüber hinaus betrifft die vorliegende Erfindung eine Dimmvorrichtung zur Leistungssteuerung einer Leuchteinrichtung mit einer Anschlusseinrichtung zum Anschließen der Leuchteinrichtung und einer Steuereinrichtung zum Betreiben der Leuchteinrichtung in einem Phasenabschnittbetrieb.

Dimmer beziehungsweise Dimmvorrichtungen dienen dazu, die Leistung einer Leuchteinrichtung zu variieren. Eine solche Leistungsvariation kann durch Phasenanschnittsteuerung oder Phasenabschnittsteuerung erfolgen. Bei der Phasenanschnittsteuerung wird der Strom verzögert nach dem Nulldurchgang der Wechselspannung eingeschaltet und fließt bis zum nächsten Nulldurchgang. Bei der Phasenabschnittsteuerung hingegen wird der Strom nach dem Nulldurchgang sofort eingeschaltet und vor dem nächsten Nulldurchgang wieder ausgeschaltet.

LED-Lampen als Leuchteinrichtungen sind meist mittels Phasenanschnitt oder Phasenabschnitt dimmbar. Mit sogenannten Universaldimmern ist sowohl der Phasenanschnitt als auch der Phasenabschnitt zum Dimmen solcher dimmbaren LED-Lampen (LED-Chip plus Vorschaltgerät) möglich. Abhängig von der Eingangskapazität und der internen Entladung des jeweiligen LED-Lampentyps verbleibt beim Dimmen an der Eingangskapazität der LED-Lampe eine elektrische Ladung, die, wenn sie nicht aktiv durch den Universaldimmer entladen wird, die Helligkeit der LED-Lampe beeinflusst. Messbar ist diese Ladung als Spannung an den Eingangsklemmen der LED-Lampe, die nur langsam durch interne Entladung abgebaut wird. Die Folge dieses Effekts ist, dass die Eingangsspannung an der LED-Lampe und damit die Helligkeit der LED-Lampe höher ausfällt als es dem aktuellen Dimmwert entspricht. Die LED-Lampen lassen sich in solchen Fällen nur minimal abdimmen.

Die Effekte von Phasenabschnittbetrieb und Phasenanschnittbetrieb bei sinusförmiger Versorgungswechselspannung hängen von der jeweiligen Last ab. Für den Phasenanschnittbetrieb wird in jeder Netzhalbwelle die Last nach einer Verzögerungszeit ab dem vorausgegangenen Stromnulldurchgang angesteuert. Bei einer Ohmschen Last ergibt sich nach der Verzögerungszeit ein unmittelbarer Anstieg der Spannung. Die Spannung ändert sich daraufhin entsprechend der Versorgungsspannung. Anders als bei der Ohmschen Last folgt die Eingangsspannung einer LED-Lampe nach Überschreiten des Scheitelwerts nicht der Netzspannung. Die Spannung an der LED-Lampe sinkt aufgrund der geringen Entladung deutlich langsamer ab als die Versorgungsspannung. Für Phasenabschnittbetrieb wird die Last in jeder Halbwelle im Netzspannungsnulldurchgang eingeschaltet und nach einer Verzögerung wieder ausgeschaltet. Bei der Ohmschen Last fällt die Spannung nach der Verzögerungszeit sofort auf Null ab. Bei einer LED-Lampe hingegen sinkt die Spannung nach dem Abschalten oftmals nur langsam ab.

Aufgrund der langen Ladungsspeicherung lassen sich auch dimmbare LED-Lampen im Phasenabschnittbetrieb nicht zufriedenstellend dimmen. Die am Eingang der Lampe verbleibende Spannung schränkt also das Abdimmen stark ein.

Viele Universaldimmer besitzen entsprechend der Druckschrift EP 0 618 667 B1 eine automatische Lasterkennung, die in der Lage ist, induktive Lasten zu erkennen. Diesen Lasten wird der Phasenanschnittbetrieb zugeordnet. Alle nichtinduktiven Lasten (ohmsche und kapazitive Lasten) werden durch Phasenabschnitt gedimmt. LED-Lampen werden meist durch die automatische Lasterkennung auf Phasenabschnitt eingestellt. Diese Ansteuermethode ist vorteilhaft für alle mit dieser Methode gut dimmbaren LED-Lampen, da dieses Dimmverfahren die Einschaltstromimpulse reduziert und damit die Anzahl parallel schaltbarer LED-Lampen deutlich erhöht. Außerdem sind die beim Dimmen verursachten Funkstörspannungen deutlich reduziert. Sind an solchen Universaldimmern LED-Lampen angeschlossen, die sich wegen einer langen Ladungsspeicherung nicht befriedigend dimmen lassen, muss der Phasenanschnittbetrieb manuell eingestellt werden. Dies erfolgt beispielsweise über Vorortbedientasten am Gerät oder durch Parametrierung mittels einer Software auf Phasenanschnittbetrieb.

Die US 2009/00 96 384 A1 offenbart einen Universaldimmer, welcher einen Typ einer verbundenen Last jedes Mal, wenn der wenn der Universaldimmer aktiviert wird, ermittelt. Der Universaldimmer beginnt seinen Betrieb im Phasenabschnittbetrieb und schaltet bei Erkennung einer induktiven Last auf einen Phasenanschnittbetrieb um.

Die EP 0 923 274 B1 offenbart einen Universaldimmer zum Dimmen von Niedervolt-Halogenlampen, bei dem mittels einer Detektorschaltung bei kapazitiver Last eine Steuerschaltung auf eine Dimmschaltung im Sinne einer Phasenabschnittsteuerung und bei induktiver Last die Steuerschaltung auf die Dimmschaltung im Sinne einer Phasenanschnittsteuerung einwirkt. Die Detektorschaltung ist dafür ausgelegt, den beim Abschalten einer induktiven Last in Phasenabschnittsteuerung auftretenden Schaltimpuls oberhalb eines vorgegebenen Schwellwerts zu detektieren.

Ferner offenbart die DE 10 2004 028 990 A1 ein Verfahren für die automatische Anpassung eines Reglers an eine Last. Im Falle einer Überspannung wird der Regler von einem Phasenabschnittmodus auf einen Phasenanschnittmodus umgestellt.

Die Aufgabe der vorliegenden Erfindung besteht darin, die Dimmwirkung bei Leuchteinrichtungen automatisch zu verbessern.

Erfindungsgemäß wird diese Aufgabe gelöst durch ein Verfahren nach Anspruch 1.

Darüber hinaus wird erfindungsgemäß bereitgestellt eine Dimmvorrichtung nach Anspruch 3.

Die Erfindung ist im beigefügten Anspruchssatz beschrieben.

Es wird also zur automatischen Leistungssteuerung eine Spannung von zumindest einem Pol beziehungsweise einer Klemme der Anschlusseinrichtung erfasst. Die erfasste Spannung entspricht beispielsweise derjenigen an der Leuchteinrichtung oder ist zumindest von der Spannung an der Leuchteinrichtung abhängig. Die erfasste Spannung und damit die Antwort der Leuchteinrichtung auf den Phasenabschnitt ist charakteristisch für die Leuchteinrichtung. Daher wird die Leuchteinrichtung in Abhängigkeit von der erfassten Spannung, d.h. ihrer Antwort auf den Phasenabschnitt, von dem Phasenabschnittbetrieb in den Phasenanschnittbetrieb geschaltet. Beim Phasenanschnitt besteht die Möglichkeit, die Schalteinrichtungen bidirektional zu betreiben. Dies bewirkt eine direkte Klemmung der Leuchteinrichtung an die Versorgungsspannung, so dass keine Ladungsspeichereffekte auftreten können. Das automatische Umschalten dient dazu, die Leuchteinrichtung sofort in den optimalen Betrieb zu setzen, ohne eine gegebenenfalls notwendige manuelle Umstellung des Dimmers auf den Phasenanschnitt durchführen zu müssen. Somit lässt sich die Leuchteinrichtung auf komfortable Weise uneingeschränkt abdimmen.

Es wird die erfasste Spannung zu einem vorgegebenen Zeitpunkt mit einem festgelegten Schwellwert verglichen und in Abhängigkeit von dem Vergleich wird in den Phasenanschnittbetrieb geschaltet. Anhand einer Schwelle ist leicht erkennbar, ob diese beispielsweise von einer internen Spannung der Dimmvorrichtung oder auch von der Spannung an der Last selbst unter- oder überschritten wird. In einem solchen Fall kann dann in Abhängigkeit von dem Über- oder Unterschreiten das automatische Schalten in den Phasenanschnittbetrieb erfolgen.

Gemäß einer nicht beanspruchten Alternative kann von der Spannung beziehungsweise von deren Verlauf ein Spannungspitzenwert erfasst werden, welcher zum Charakterisieren der Leuchteinrichtung verwendet wird. So lässt sich beispielsweise anhand des Spannungspitzenwerts feststellen, ob es sich beispielsweise um eine LED-Last mit kleinem oder großem Ladungsspeichereffekt handelt.

Das automatische Verfahren zur Umschaltung vom Phasenabschnittbetrieb in den Phasenanschnittbetrieb wird vorteilhafterweise automatisch gestartet, wenn zumindest ein Teil einer Versorgungsspannung an die Anschlusseinrichtung gelegt wird. Wenn also zunächst keine Versorgungsspannung an der Anschlusseinrichtung anliegt und anschließend eine Versorgungsspannung an die Anschlusseinrichtung (gegebenenfalls in Serie mit der Leuchteinrichtung) angelegt wird, wird automatisch in den geeigneten Betrieb zur Leistungssteuerung geschaltet.

Das Schalten in den Phasenanschnittbetrieb kann dauerhaft so lange erfolgen, wie die Leuchteinrichtung mit Spannung versorgt wird. Dies bedeutet, dass die Überprüfung der geeigneten Leistungssteuerung nicht ständig erfolgen muss, wodurch Steuerungsaufwand und damit Energie eingespart werden kann.

Das erfindungsgemäße automatische Verfahren zum automatischen Schalten in den jeweils geeigneten Betrieb zur Leistungssteuerung wird nur dann gestartet, wenn zuvor die Leuchteinrichtung durch ein automatisches Lasterkennungsverfahren als nichtinduktive Last erkannt wird.

Auf diese Weise lässt sich vermeiden, dass eine induktive Last durch Phasenabschnittbetrieb betrieben wird, bei dem mit hoher Wahrscheinlichkeit Beschädigungen auftreten können.

Bei der erfindungsgemäßen Dimmvorrichtung kann die Anschlusseinrichtung zwei Anschlussklemmen aufweisen, zwischen die zwei antiseriell geschaltete Feldeffekttransistoren geschaltet sind, deren Mittenabgriff eine Masse bildet. Die beiden antiseriell geschalteten Feldeffekttransistoren bilden einen bidirektionalen Schalter, wodurch ein Phasenabschnitt beziehungsweise ein Phasenanschnitt in jeder Halbwelle möglich ist. Bei den Feldeffekttransistoren kann es sich um MOSFETs handeln, die insbesondere selbstsperrend sind und am jeweiligen Gate durch einen separaten Treiber angesteuert werden.

Die Erfassungseinrichtung zum Messen beziehungsweise Erfassen der Spannung kann dazu ausgebildet sein, die Spannung zwischen der Masse und einer der Anschlussklemmen zu erfassen. Die Masse zwischen den antiseriell geschalteten Feldeffekttransistoren dient also als Bezugsspannung für Entscheidungen und Schaltvorgänge. Bei der Leuchteinrichtung handelt es sich beispielsweise um eine LED-Lampe, die an die Anschlusseinrichtung angeschlossen ist. Derartige LED-Lampen besitzen Vorschaltgeräte mit unterschiedlichen Ladungsspeichereffekten. Sie stellen aber in der Regel eine kapazitive Last dar, bei der Phasenabschnittbetrieb möglich ist.

Die oben im Zusammenhang mit dem erfindungsgemäßen Verfahren dargestellten Verfahrensmerkmale können auch als funktionelle Merkmale für die erfindungsgemäße Dimmvorrichtung gesehen werden. Umgekehrt können auch die im Zusammenhang mit der Dimmvorrichtung geschilderten funktionellen Merkmale als Verfahrensmerkmale betrachtet werden.

Die vorliegende Erfindung wird nun anhand der beigefügten Zeichnungen näher erläutert, in denen zeigen:
- FIG 1: den prinzipiellen Aufbau eines Universaldimmers;
- FIG 2: einen Spannungsverlauf über einer Last in der positiven Halbwelle;
- FIG 3: einen Spannungsverlauf zwischen Außenleiter und Masse in der positiven Halbwelle; und
- FIG 4: einen Verfahrensablauf einer erweiterten Lasterkennung gemäß der vorliegenden Erfindung.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Merkmalskombinationen, sondern auch in Alleinstellung oder in anderen technisch sinnvollen Kombinationen realisiert werden können.

In dem folgenden Beispiel soll eine LED-Lampe gedimmt werden. Sie steht exemplarisch für beliebige Leuchteinrichtungen mit langer Ladungsspeicherung. Ziel ist es, die LED-Lampe befriedigend zu dimmen, ohne den Phasenanschnittbetrieb manuell einstellen zu müssen.

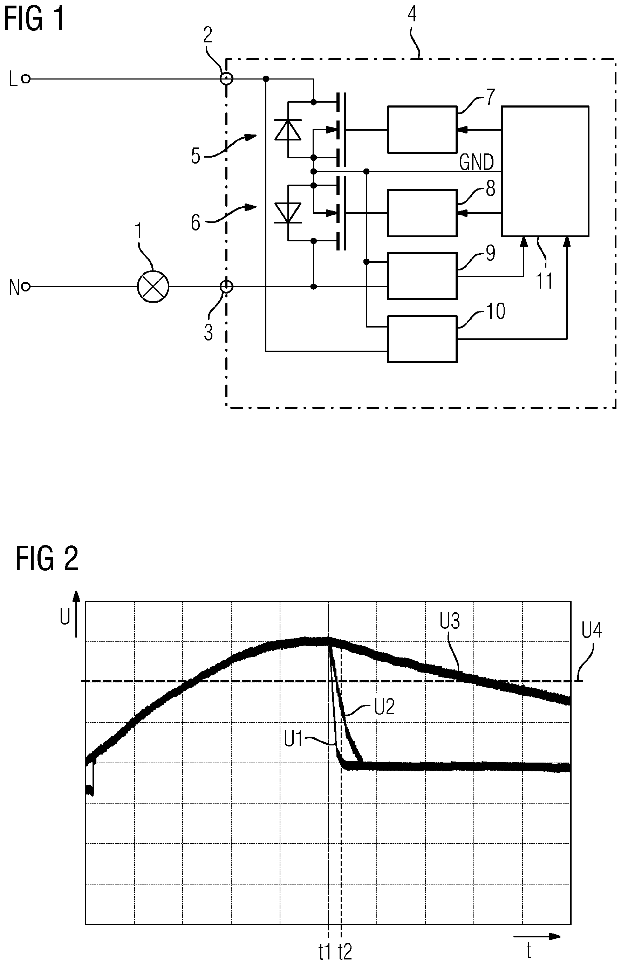

Eine exemplarische Dimmvorrichtung 4 zur Leistungssteuerung einer wechselstrombetriebenen Leuchteinrichtung 1 ist in FIG 1 dargestellt. Die Dimmvorrichtung 4 besitzt eine Außenleiterklemme 2 zum Anschluss an einen Außenleiter L eines Wechselspannungssystems. Darüber hinaus besitzt die Dimmvorrichtung eine Lastklemme 3, an der die Last (hier die Leuchteinrichtung 1) angeklemmt ist. Der andere Pol der Leuchteinrichtung 1 (z. B. die LED-Lampe) ist an einen Neutralleiter N angeschlossen. Die Dimmvorrichtung 4 besitzt im Wesentlichen eine Steuereinrichtung beispielsweise mit den Komponenten 5, 6, 7, 8 und 11 von FIG 1 und eine Erfassungseinrichtung mit den Komponenten 9 und 10. Im konkreten Beispiel besitzt die Steuereinrichtung zwei Schalteinrichtungen 5 und 6, die hier jeweils als MOSFETs realisiert sein können.

Die beiden MOSFETs sind hier antiseriell geschaltet und ihr Mittenabgriff ist jeweils mit der Source-Klemme verbunden. Der Mittenabgriff bildet die Masse GND für die elektrische Schaltung der Dimmvorrichtung 4. Die MOSFETs besitzen jeweils eine integrierte, parasitäre Diode parallel zur jeweiligen Drain-Source-Strecke. Diese beiden parasitären Dioden sind mit ihrer jeweiligen Anode zu dem Mittenabgriff der beiden MOSFETs beziehungsweise zur Masse GND gerichtet. Das Gate des MOSFET der Schalteinrichtung 5 wird von einem Treiber 7 gesteuert, der selbst beispielsweise von einer Ansteuerschaltung 11 beziehungsweise einem Mikrocontroller gesteuert werden kann. In gleicher Weise wird das Gate des MOSFET der zweiten Schalteinrichtung 6 von einem Treiber 8 gesteuert, welcher seinerseits wiederum von der Ansteuerschaltung 11 angesteuert wird.

Gemäß einer Ausführungsform besitzt die Dimmvorrichtung eine erste Schaltung 9 zur Erkennung von Lampen mit langer Ladungsspeicherung. Diese Schaltung 9 greift die Spannung zwischen Lastklemme 3 und Masse GND am Mittenabgriff der beiden antiseriellen Feldeffekttransistoren ab. Sie liefert entsprechende Mess- beziehungsweise Erfassungssignale an die Ansteuerschaltung 11.

Gemäß einer alternativen Ausführungsform ist eine Schaltung 10 zur Erkennung von Lampen mit großer Ladungsspeicherung vorgesehen, die eine Spannung zwischen der Außenleiterklemme 2 und der Masse GND am Mittenabgriff der beiden antiseriell geschalteten Feldeffekttransistoren 5, 6 abgreift.

Nachfolgend wird der Betrieb der Dimmvorrichtung im Einzelnen erläutert, wobei - wie erwähnt - als Leuchteinrichtung 1 beispielsweise eine LED-Lampe verwendet wird. Die Dimmvorrichtung ist beispielsweise als Universaldimmer, mit dem Phasenanschnitt und Phasenabschnitt möglich sind, realisiert. Dieser Universaldimmer besitzt ein Lasterkennungsverfahren, mit dem prinzipiell eine induktive Last und eine kapazitive Last an der Dimmvorrichtung unterschieden werden kann. Entsprechend dieser Lasterkennung kann nun bei kapazitiver Last ein Phasenabschnittbetrieb und bei induktiver Last ein Phasenanschnittbetrieb gewählt werden. Wird nun in dem konkreten Beispiel die LED-Lampe als kapazitive Last erkannt, ist mit dem Phasenabschnittbetrieb nicht automatisch sichergestellt, dass die LED-Lampe auch über den gesamten Bereich dimmbar ist. Daher wird erfindungsgemäß ein erweitertes Lasterkennungsverfahren bereitgestellt, das sich einem bekannten Lasterkennungsverfahren anschließen kann. Bei diesem erweiterten Lasterkennungsverfahren wird die Last in mindestens einer Netzhalbwelle im Phasenabschnittbetrieb, z. B. bis zum Netzspannungsscheitelwert, eingeschaltet und dann ausgeschaltet. Bei Ohmschen Lasten fällt die Eingangsspannung der Lampe nach dem Ausschalten schnell ab. Bei kapazitiven Lasten wie der LED-Lampe fällt die Spannung dagegen abhängig von der Dauer der Ladungsspeicherung mehr oder weniger langsam ab.

FIG 2 zeigt den Verlauf einer Eingangsspannung U1 einer Ohmschen Last, den Verlauf einer Eingangsspannung U2 einer LED-Lampe mit kurzer Ladungsspeicherung und den Verlauf einer Eingangsspannung U3 einer LED-Lampe mit langer Ladungsspeicherung. Zum Zeitpunkt t1 wird der jeweilige MOSFET beziehungsweise die jeweilige Schalteinrichtung 5, 6 entsprechend dem Phasenabschnittbetrieb abgeschaltet. Der Abfall der Eingangsspannung der jeweiligen Lampe innerhalb einer definierten Zeitspanne t2 - t1 ab dem Abschaltzeitpunkt t1 kann als Kriterium für die Dauer der Ladungsspeicherung an der Lampe genutzt werden. Liegt die Eingangsspannung (vergleiche U3) der Lampe zum Zeitpunkt t2 beispielsweise über einem vorgegebenen Schwellwert U4, dann erfordert die Lampe eine Ansteuerung im Phasenanschnittbetrieb. Andernfalls, wenn die Eingangsspannung (vergleiche U1) noch vor dem Zeitpunkt t2 unter den Schwellwert U4 absinkt, kann die Lampe beziehungsweise die Leuchteinrichtung im Phasenabschnittbetrieb weiter betrieben werden.

Die Eingangsspannung der Last, also der Leuchteinrichtung 1, liegt zwischen dem Potenzial des Neutralleiters N und des Potenzials am Lastausgang beziehungsweise an der Lastklemme 3 (vergleiche FIG 1). Die Detektion dieser Spannung ist schaltungstechnisch aufwändig. Der Spannungsverlauf über der Last wirkt sich aber auch auf die Spannung aus, die von Masse GND der Ansteuerschaltung aus gegen den Außenleiter L oder gegen den Lastausgang beziehungsweise die Lastklemme 3 gemessen wird. Diese Spannungen können durch die Schaltungen 9 und 10 gemessen beziehungsweise erfasst werden. Die entsprechenden Messwerte werden von der Ansteuerschaltung 11 zur Ansteuerung der Schalteinrichtungen 5 und 6 über die Treiber 7 und 8 genutzt.

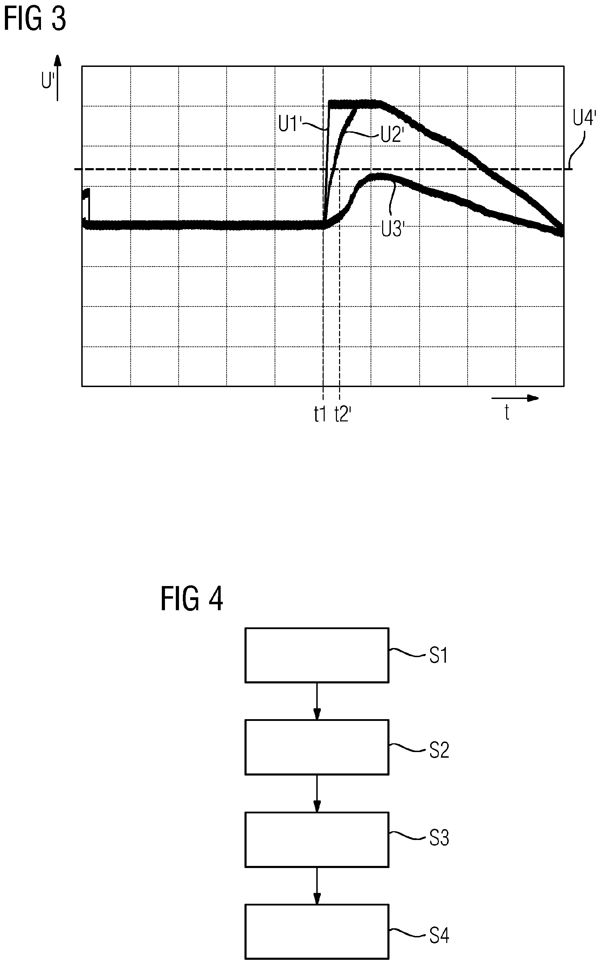

FIG 3 zeigt den Spannungsverlauf U' am Beispiel der positiven Netzhalbwelle gemessen vom Außenleiter L gegen Masse GND mit den Lasten entsprechend dem Beispiel von FIG 2, nämlich einer Ohmschen Last, einer Lampe mit kurzer Ladungsspeicherung und einer Lampe mit langer Ladungsspeicherung. Durch das Abschalten der Schalteinrichtung 5 zum Zeitpunkt t1 steigt die Spannung U1' an dem Außenleiter L sprunghaft an und folgt von da an der Netzhalbwelle. Bei kurzer Ladungsspeicherung ergibt sich am Außenleiter L beziehungsweise an der Außenleiterklemme 2 der Dimmvorrichtung 4 die Spannung U2' gegenüber Masse GND. Diese Spannung steigt noch vor dem Zeitpunkt t2' über einen vorgegebenen Schwellwert U4'. Soll allerdings eine LED-Lampe mit langer Ladungsspeicherung gedimmt werden, so ergibt sich beispielsweise an der Außenleiterklemme 2 gegenüber Masse GND die Spannung U3'. Diese erreicht den Schwellwert U4' nicht, geschweige denn bis zum Zeitpunkt t2'.

Anhand dieser Spannungsverläufe U2' und U3' kann der Lampentyp unterschieden werden. Insbesondere kann die Entscheidung daran orientiert werden, ob die gemessene Spannung am Außenleiter L beziehungsweise der Außenleiterklemme 2 bis zum Zeitpunkt t2' den Schwellwert U4' erreicht oder nicht.

Der gleiche Spannungsverlauf um eine Halbwelle zeitlich versetzt ergibt sich auch in der negativen Halbwelle gemessen gegen den Lastausgang beziehungsweise die Lastklemme 3. Somit können auch diese Spannungskurven auf einfache Weise zur Erkennung von LED-Lampen mit langer Ladungsspeicherung genutzt werden. Als Konsequenz der Erkennung des Lampentyps kann die Lampe im entsprechenden Betrieb angesteuert werden. Wenn nämlich konkret die Spannung zwischen Außenleiter L und Masse GND zum Zeitpunkt t2' unter dem festgelegten Schwellwert U4' liegt, dann erfordert die Lampe eine Ansteuerung im Phasenanschnittbetrieb. Die Steuerung ist entsprechend vom Phasenabschnittbetrieb zum Phasenanschnittbetrieb umzuschalten. Der Universaldimmer kann nach einer solchen automatisch durchgeführten Messung beziehungsweise Erfassung einer Spannung dauerhaft in den Phasenanschnittbetrieb umschalten. Alternativ kann die Spannung auch gescannt und der gemessene Spannungsspitzenwert als Kriterium für eine LED-Lampe mit langer Ladungsspeicherung genutzt werden.

Verfahrensschritte zur erfindungsgemäßen Leistungssteuerung einer Leuchteinrichtung ergeben sich aus FIG 4. Nach einem Anschließen S1 der Leuchteinrichtung an einer Anschlusseinrichtung erfolgt ein Betreiben S2 der Leuchteinrichtung in einem Phasenabschnittbetrieb.

Sodann erfolgt ein Erfassen S3 einer Spannung an zumindest einem Pol der Anschlusseinrichtung und ein automatisches Schalten S4 der Leuchteinrichtung in Abhängigkeit von der erfassten Spannung von dem Phasenabschnittbetrieb in einen Phasenanschnittbetrieb.

Vorteilhaft wird, wie oben angedeutet wurde, ein bekanntes Lasterkennungsverfahren zur Erkennung einer induktiven Last mit der erfindungsgemäßen Erkennung des Lampenbetriebs ergänzt. Diese Verfahren werden z. B. automatisch nach Anlegen der Netzspannung an den Dimmer gestartet. Nur wenn die Last als nichtinduktiv erkannt wurde, wird an die bisherige Lasterkennnung das hier beschriebene Verfahren zur Erkennung von z. B. LED-Lampen mit langer Ladungsspeicherung angehängt. Eine schädliche kurze Ansteuerung einer induktiven Last im Phasenabschnittbetrieb kann damit vermieden werden. Dies ist vorteilhaft, da jede Ansteuerung einer induktiven Last im Phasenabschnitt im Abschaltaugenblick zu einer Entladung der gespeicherten induktiven Energie über dem Schaltelement führt und damit den schaltenden MOSFET gefährdet.

In vorteilhafter Weise können also beispielsweise Universaldimmer mit einer automatisierten Lasterkennung selbstständig nicht nur induktive Lasten, sondern auch LED-Lampen mit langer Ladungsspeicherung erkennen, die ebenso eine Ansteuerung im Phasenanschnitt erfordern. Alle übrigen Lasten werden im Phasenabschnitt angesteuert. LED-Lampen werden damit, unabhängig davon, ob sie zu der Gruppe mit langer oder mit kurzer Ladungsspeicherung gehören, immer mit dem für sie optimalen Dimmverfahren angesteuert.

### Bezugszeichenliste

- 1: Leuchteinrichtung
- 2: Außenleiterklemme
- 3: Lastklemme
- 4: Dimmvorrichtung
- 5, 6: Schalteinrichtungen
- 7, 8: Treiber
- 9, 10: Schaltungen
- 11: Ansteuerschaltung

- L: Außenleiter
- N: Neutralleiter
- S1: Anschließen
- S2: Betreiben
- S3: Erfassen
- S4: Schalten
- t1, t2, t2': Zeitpunkte
- U1, U2, U3, U1', U2', U3': Eingangsspannungen
- U4, U4': Schwellwerte

## Patentansprüche

1. Verfahren zur Leistungssteuerung einer Leuchteinrichtung (1) durch
- Anschließen (S1) der Leuchteinrichtung (1) an einer Anschlusseinrichtung (2, 3) einer Dimmvorrichtung (4),
- Durchführen eines Lasterkennungsverfahrens, mit dem eine an die Dimmvorrichtung (4) angeschlossene Last als eine induktive Last oder als eine nichtinduktive Last erkannt werden kann, wobei bei erkannter nichtinduktiver Last ein Phasenabschnittbetrieb und bei erkannter induktiver Last ein Phasenanschnittbetrieb jeweils gewählt wird, und
- Betreiben der Leuchteinrichtung (1) in dem Phasenanschnittbetrieb, wenn die angeschlossene Leuchtvorrichtung als induktive Last erkannt wird,
- Betreiben (S2) der Leuchteinrichtung (1) in einem Phasenabschnittbetrieb, wenn die angeschlossene Leuchtvorrichtung als nichtinduktive Last erkannt wird, **gekennzeichnet durch**
nach Schalten in den Phasenabschnittsbetrieb
- Erfassen (S3) einer Spannung an zumindest einem Pol der Anschlusseinrichtung zu einem vorgegebenen Zeitpunkt (t2) nach einem Abschaltzeitpunkt (t1) des Phasenabschnittsbetriebs und Vergleichen der erfassten Spannung mit einem festgelegten Schwellwert,
- automatisches Schalten (S4) der Leuchteinrichtung (1) von dem Phasenabschnittbetrieb in den Phasenanschnittsbetrieb in Abhängigkeit von dem Vergleich.

2. Verfahren nach Anspruch 1, wobei das Schalten (S4) in den Phasenanschnittbetrieb dauerhaft, solange die Leuchteinrichtung (1) mit Spannung versorgt wird, erfolgt.

3. Dimmvorrichtung (4) zur Leistungssteuerung einer Leuchteinrichtung (1), wobei die Dimmvorrichtung (4) als Universaldimmer realisiert ist, der für einen Phasenanschnittbetrieb und Phasenabschnittbetrieb eingerichtet ist, wobei die Dimmvorrichtung (4) dazu eingerichtet ist, ein Lasterkennungsverfahren durchzuführen, mit dem eine an der Dimmvorrichtung (4) angeschlossene Leuchteinrichtung als induktive Last oder als nichtinduktive Last unterschieden werden kann, wobei bei erkannter nichtinduktiver Last der Phasenabschnittbetrieb und bei erkannter induktiver Last der Phasenanschnittbetrieb jeweils gewählt wird,
die Dimmvorrichtung (4) aufweisend
- eine Anschlusseinrichtung (2, 3) zum Anschließen der Leuchteinrichtung (1),
- eine Erfassungseinrichtung (9, 10) zum Erfassen einer Spannung an zumindest einem Pol der Anschlusseinrichtung (2, 3),
- eine Steuereinrichtung (5, 6, 7, 8, 11) zum Betreiben der angeschlossenen Leuchteinrichtung (1);
- wobei die Dimmvorrichtung (4) dazu ausgelegt ist, die angeschlossene Leuchteinrichtung bei erkannter induktiver Last in dem Phasenanschnittbetrieb zu betreiben und bei erkannter nichtinduktiver Last die Leuchteinrichtung (1) in dem Phasenabschnittbetrieb zu betreiben
**dadurch gekennzeichnet, dass**
- die Steuereinrichtung (5, 6, 7, 8, 11) weiter dazu ausgelegt ist,
nach Schalten in den Phasenabschnittsbetrieb eine Spannung mittels der Erfassungseinrichtung zu einem vorgegebenen Zeitpunkt (t2') nach einem Abschaltzeitpunkt des Phasenabschnittbetriebs zu erfassen und mit einem festgelegten Schwellwert (U4, U4') zu vergleichen und in Abhängigkeit von dem Vergleich automatisch von dem Phasenabschnittbetrieb in den Phasenanschnittbetrieb zu schalten.

4. Dimmvorrichtung (4) nach Anspruch 3, aufweisend zwei antiseriell geschaltete Feldeffekttransistoren (5, 6), wobei die Anschlusseinrichtung (2, 3) zwei Anschlussklemmen aufweist, und wobei zwischen die zwei Anschlussklemmen die zwei antiseriell geschalteten Feldeffekttransistoren (5, 6) geschaltet sind, deren Mittenabgriff eine Masse (GND) bildet.

5. Dimmvorrichtung (4) nach Anspruch 4, wobei die Erfassungseinrichtung (9, 10) dazu ausgebildet ist, die Spannung zwischen der Masse (GND) und einer der Anschlussklemmen zu erfassen.

6. System aufweisend eine Dimmvorrichtung (4) nach einem der Ansprüche 3 bis 5 und der Leuchteinrichtung (1), wobei die Leuchteinrichtung (1) eine LED-Lampe ist, die an die Anschlusseinrichtung (2, 3) angeschlossen ist.

## Claims

1. Method for controlling the power to a lighting facility (1) by
- connecting (S1) the lighting facility (1) to a connection facility (2, 3) of a dimming apparatus (4),
- implementing a load detection method, with which a load connected to the dimming apparatus (4) can be identified as an inductive load or as a non-inductive load, wherein when a non-inductive load is identified a trailing edge operation is selected and when an inductive load is identified a leading edge operation is selected and
- operating the lighting facilty (1) in the leading edge operation, when the connected lighting apparatus is identified as an inductive load,
- operating (S2) the lighting facility (1) in a trailing edge operation when the connected lighting apparatus is identified as a non-inductive load,
**characterised by**
after switching into the trailing edge operation,
- detecting (S3) a voltage on at least one pole of the connection facility at a predetermined time instant (t2) after a switch-off time instant (t1) of the trailing edge operation and comparing the detected voltage with a fixed threshold value,
- automatically switching (S4) the lighting facility (1) from the trailing edge operation into the leading edge operation as a function of the comparison.

2. Method according to claim 1, wherein the switching (S4) into the leading edge operation takes place permanently provided the lighting facility (1) is supplied with voltage.

3. Dimming apparatus (4) for controlling the power to a lighting facility (1), wherein the dimming apparatus (4) is realised as a universal dimmer, which is designed for a leading edge operation and a trailing edge operation, wherein the dimming apparatus (4) is designed to carry out a load identification method with which a lighting facility connected to the dimming apparatus (4) can be differentiated as an inductive load or as a non-inductive load, wherein when the non-inductive load is identified, the trailing edge operation is selected and wherein when the inductive load is identified, the leading edge operation is selected,
the dimming apparatus (4) having
- a connection facility (2, 3) for connecting the lighting facility (1),
- a detection facility (9, 10) for detecting a voltage on at least one pole of the connection facility (2, 3),
- a control facility (5, 6, 7, 8, 11) for operating the connected lighting facility (1);
- wherein the dimming apparatus (4) is designed to operate the connected lighting facility when the inductive load is identified in the leading edge operation and to operate the light facility (1) in the trailing edge operation when the non-inductive load is identified, **characterised in that**
- the control facility (5, 6, 7, 8, 11) is further designed,
after switching into the trailing edge operation, to detect a voltage by means of the detection facility at a predetermined time instant (t2') after a switch-off time instant of the trailing edge operation and to compare the same with a fixed threshold value (U4, U4'), and to automatically switch from the trailing edge operation into the leading edge operation as a function of the comparison.

4. Dimming apparatus (4) according to claim 3, having two field effect transistors (5, 6) connected in anti-series, wherein the connection facility (2, 3) has two connection terminals and wherein two field effect transistors (5, 6) connected in anti-series are connected between the two connection terminals, the central tap of which forms a ground (GND).

5. Dimming apparatus (4) according to claim 4, wherein the detection facility (9, 10) is embodied to detect the voltage between the ground (GND) and one of the connection terminals.

6. System having a dimming apparatus (4) according to one of claims 3 to 5 and the lighting facility (1), wherein the lighting facility (1) is an LED lamp which is connected to the connection facility (2, 3).

## Revendications

1. Procédé de contrôle de puissance d'un dispositif d'éclairage (1) par
- connexion (S1) du dispositif d'éclairage (1) à un dispositif de connexion (2,3) d'un dispositif de diminution d'éclairage (4),
- réalisation d'un procédé de détection de charge, avec lequel une charge connectée au dispositif de diminution d'éclairage (4) peut être reconnue comme charge inductive ou comme charge non inductive, dans lequel, en cas de charge reconnue comme non inductive est sélectionné un mode à redressement en sortie de phase, et en cas de charge reconnue comme inductive est sélectionné respectivement un mode à redressement en entrée de phase, et
- fonctionnement du dispositif d'éclairage (1) en mode à redressement en entrée de phase lorsque le dispositif d'éclairage connecté est identifié comme à charge inductive,
- fonctionnement (S2) du dispositif d'éclairage (1) en mode à redressement en sortie de phase lorsque le dispositif d'éclairage connecté est identifié comme à charge non inductive,
**caractérisé par**
après passage en mode à redressement en sortie de phase
- relevé (S3) d'une tension à au moins une borne du dispositif de raccordement à un instant donné (t2) après un instant d'extinction (t1) du mode à redressement en sortie de phase et comparaison de la tension relevée avec une valeur seuil déterminée,
- commutation automatique (S4) du dispositif d'éclairage (1) du mode à redressement en sortie de phase au mode à redressement en entrée de phase en fonction de la comparaison.

2. Procédé selon la revendication 1, dans lequel la commutation (S4) en mode à redressement en entrée de phase dure aussi longtemps que le dispositif d'éclairage (1) est sous tension.

3. Dispositif de diminution d'éclairage (4) pour le contrôle de puissance d'un dispositif d'éclairage (1), le dispositif de diminution d'éclairage (4) étant conçu comme un dispositif d'éclairage universel pour un mode à redressement en entrée de phase et pour un mode à redressement en sortie de phase, dans lequel le dispositif de diminution d'éclairage (4) est conçu pour réaliser un procédé de détection de charge, avec lequel un dispositif d'éclairage connecté au dispositif de diminution d'éclairage (4) peut être distingué comme charge inductive ou comme charge non inductive, dans lequel, en cas de charge reconnue comme non inductive est sélectionné un mode à redressement en sortie de phase, et en cas de charge reconnue comme inductive est sélectionné respectivement un mode à redressement en entrée de phase,
le dispositif de diminution d'éclairage (4) présentant
- un dispositif de raccordement (2,3) pour la connexion du dispositif d'éclairage (1),
- un dispositif de mesure (9,10) pour relever une tension à au moins une borne du dispositif de raccordement (2, 3),
- un dispositif de commande (5,6,7,8,11) pour actionner le dispositif d'éclairage (1) ;
- dans lequel le dispositif de diminution d'éclairage (4) est conçu pour faire fonctionner le dispositif d'éclairage raccordé en mode à redressement en entrée de phase en cas de reconnaissance de charge inductive et pour faire fonctionner le dispositif d'éclairage (1) en mode à redressement en sortie de phase en cas de reconnaissance de charge non inductive,
**caractérisé en ce que**
- le dispositif de commande (5,6,7,8,11) est conçu, en outre, pour relever une tension après commutation en mode à redressement en sortie de phase au moyen d'un dispositif de mesure en un instant donné (t2') après un instant de coupure du mode à redressement en sortie de phase, pour la comparer à une valeur seuil prédéterminée (U4, U4') et pour commuter automatiquement du mode à redressement en sortie de phase au mode à redressement en entrée de phase en fonction de la comparaison.

4. Dispositif de diminution d'éclairage (4) selon la revendication 3, présentant deux transistors à effet de champ (5, 6) montés de manière antisérielle, dans lequel le dispositif de raccordement (2, 3) présente deux bornes de raccordement et dans lequel entre les deux bornes de raccordement sont montés les deux transistors à effet de champ (5, 6) montés de manière antisérielle, dont la prise intermédiaire forme une masse (GND).

5. Dispositif de diminution d'éclairage (4) selon la revendication 4, dans lequel le dispositif de mesure (9,10) est conçu pour relever la tension entre la masse (GND) et l'une des bornes de raccordement.

6. Système présentant un dispositif de diminution d'éclairage (4) selon l'une des revendications 3 à 5 et le dispositif d'éclairage (1), le dispositif d'éclairage (1) étant une lampe LED connectée au dispositif de raccordement (2,3).
